# EUROPÄISCHE PATENTSCHRIFT

(11) **EP 4 380 828 B1**
(45) Veröffentlichungstag und Bekanntmachung des Hinweises auf die Patenterteilung: **27.05.2026**
(21) Anmeldenummer: 22761973.1
(22) Anmeldetag: 02.08.2022
(51) Int. Cl.: B60R 21/231

(54) **AIRBAGVORRICHTUNG ZUM ANORDNEN AN EINEM RÜCKENTEIL EINER VERSCHIEBBAREN SITZVORRICHTUNG EINES KRAFTFAHRZEUGS SOWIE SITZVORRICHTUNG**
AIRBAG DEVICE FOR ARRANGEMENT ON A BACK PART OF A SLIDABLE SEAT DEVICE OF A MOTOR VEHICLE AND SEAT DEVICE
DISPOSITIF DE COUSSIN DE SÉCURITÉ GONFLABLE DESTINÉ À ÊTRE DISPOSÉ SUR UNE PARTIE ARRIÈRE D'UN DISPOSITIF DE SIÈGE COULISSANT D'UN VÉHICULE AUTOMOBILE ET DISPOSITIF DE SIÈGE

(30) Priorität: 05.08.2021 DE 102021004054
(43) Veröffentlichungstag der Anmeldung: 12.06.2024
(73) Patentinhaber: Mercedes-Benz Group AG, 70372 Stuttgart (DE)
(72) Erfinder: GÄRTNER, Eric, 72160 Horb (DE); GEISLER, Claus, 71083 Herrenberg (DE); QUARG, Lutz, 71032 Boeblingen (DE)
(74) Vertreter: Novagraaf Group
(86) Internationale Anmeldenummer: PCT/EP2022/071750
(87) Internationale Veröffentlichungsnummer: WO 2023/012187

(56) Entgegenhaltungen:
- EP-A1- 2 581 276
- EP-A1- 3 470 273
- DE-A1- 102007 052 246
- DE-A1- 19 540 911
- US-A1- 2015 343 986
- US-A1- 2017 361 800
- US-A1- 2019 061 668
- US-A1- 2019 077 356
- US-A1- 2019 111 878

## Beschreibung

Die Erfindung betrifft eine Sitzvorrichtung mit einem Rückenteil für ein Kraftfahrzeug, mit einer an dem Rückenteil der Sitzvorrichtung angeordneten Airbagvorrichtung gemäß dem Oberbegriff von Patentanspruch 1.

Aus dem Stand der Technik sind bereits Airbagvorrichtungen bekannt, welche beispielsweise für einen Fahrer eines Kraftfahrzeugs beziehungsweise Beifahrer eines Kraftfahrzeugs ausgebildet sind. Ferner kann das Kraftfahrzeug auch einen sogenannten Fondbereich aufweisen, wobei Personen, die sich in dem Fondbereich befinden, ebenfalls über sogenannte Fondairbags geschützt werden können. Bei diesen Airbags kann es sich beispielsweise um sogenannte Röhrenstrukturairbags (RSB) handeln, welche in der Sitzlehne des Vordersitzes verbaut sind. Diese Airbagvorrichtung verringert bei einem Frontalaufprall die auf einen Fondinsassen auf den äußeren, hinteren Sitzplätzen einwirkenden Belastungen. Dabei ist der Abstand der Airbagvorrichtung zum Fondinsassen dadurch variabel, dass der Vordersitz in der Länge verschiebbar ist. Der Wirkbereich des Fondairbags ist bezogen auf die Sitzlehne immer gleich. Bei Verschieben des Vordersitzes verschiebt sich der Wirkbereich der Airbagvorrichtung ebenso. Ist also der Vordersitz in der vordersten Position, kann es vorkommen, dass der Insasse, je nach Gewicht und Körperabmaßen des Insassen, keine Interaktion mit der Airbagvorrichtung erfährt.

Die DE 10 2008 037810 A1 beschreibt, dass die Schutzwirkung von Airbags insbesondere bei Schrägaufprall oder bei nicht mittiger Beaufschlagung verbessert werden soll. Hierzu wird ein Fahrzeuginsassensicherheitssystem beziehungsweise Rückhaltesystem mit einem Gassack, der im gefüllten oder entfalteten Zustand eine vorgegebene Stützkraftverteilung besitzt, und mindestens einem energieabsorbierenden Element vorgeschlagen, das an dem Gassack angebracht ist, um den Gassack zu entfalten oder um dessen Stützkraft lokal zu erhöhen. Das oder die energieabsorbierenden Elemente sind derart angeordnet, dass mindestens ein energieabsorbierendes Element sich an einen Insassen anlegen und zumindest in Grenzen dessen Bewegungen zumindest teilweise folgen kann und eine insassenschützende Funktion aufweist und/oder dass der Gassack gegenüber einem abzustützenden Insassen eine Trichterfunktion aufweist. Durch diese Trichterfunktion wird der Insasse beim Aufprall zum Zentrum des Airbags geleitet und gegebenenfalls durch die Seitenwände auch seitlich geschützt.

Die DE 10 2007 052 246 A1 betrifft einen Airbag, insbesondere für einen Kraftwagen, mit einer Stützstruktur, welche aus einer Aufbewahrungsposition in eine Rückhalteposition bewegbar ist, mit einer Umhüllung, mittels welcher ein durch die Stützstruktur in ihrer Rückhalteposition gebildetes Rückhaltevolumen des Airbags umgeben ist, und mit wenigstens einem sich innerhalb des Rückhaltevolumens erstreckenden Verbindungselement, mittels welchem Hohlkörper der Stützstruktur und/oder Flächenbereiche der Umhüllung miteinander verbunden sind. Die EP 3 470 273 A1 zeigt eine Sitzvorrichtung nach dem Oberbegriff des Anspruchs 1. Die US2019/111878A1 zeigt eine Sitzvorrichtung mit einer an dem Rückenteil der Sitzvorrichtung angeordneten Röhrenstruktursackvorrichtung.

Aufgabe der vorliegenden Erfindung ist es, eine Sitzvorrichtung zu schaffen, mittels welcher ein verbesserter Schutz eines Insassen, insbesondere in einem Fondbereich des Kraftfahrzeugs, realisiert werden kann.

Diese Aufgabe wird durch eine Sitzvorrichtung gemäß dem unabhängigen Anspruch 1 gelöst. Vorteilhafte Ausgestaltungsformen sind in den Unteransprüchen angegeben.

Ein Aspekt der Erfindung betrifft eine Airbagvorrichtung zum Anordnen an einem Rückenteil einer verschiebbaren Sitzvorrichtung eines Kraftfahrzeugs, mit zumindest einem ersten Gassack, welcher mit einer Entfaltungseinrichtung der Airbagvorrichtung in Abhängigkeit von einem Ansteuerungssignal in eine Auffangstellung entfaltet ist, wobei der Gassack in der Auffangstellung zum Auffangen eines Körperteils eines Insassen des Kraftfahrzeugs ausgebildet ist, wobei der Insasse dem Rückenteil zugewandt ist.

Es ist vorgesehen, dass die Airbagvorrichtung einen zweiten Gassack aufweist, welcher zumindest in der Auffangstellung zwischen dem Rückenteil und dem ersten Gassack entfaltet ist.

Insbesondere ist es dadurch ermöglicht, dass auch bei unterschiedlichen Verstellpositionen der verschiebbaren Sitzvorrichtung dennoch zuverlässig der Insasse im Fondbereich bei einem Aufprall geschützt ist. Insbesondere ist sozusagen der erste Gassack an dem Rückenteil hin zum Insassen gewendet, welcher sich insbesondere in dem sogenannten Fondbereich des Kraftfahrzeugs befindet. Bei einem Frontalaufprall bewegt sich dann ein Körperteil, beispielsweise ein Kopf des Insassen, in Richtung des Rückenteils, wobei das Körperteil dann durch zumindest den ersten Gassack und/oder den zweiten Gassack aufgefangen werden kann. Der zweite Gassack überwindet somit insbesondere den verschiebbaren Längenanteil des Kraftfahrzeugs. Somit kann sichergestellt werden, dass auch in einer vordersten Position der Sitzvorrichtung relativ zu dem Fondbereich beziehungsweise relativ zu dem Insassen dennoch der Insasse zuverlässig durch die Airbagvorrichtung aufgefangen werden kann.

Der zweite Gassack kann insbesondere als sogenannte konventionelle Airbagvorrichtung beziehungsweise konventioneller Gassack ausgebildet sein, der insbesondere zwischen dem Sitzlehnenteil und dem ersten Gassack aufgeblasen wird, wodurch der insbesondere bereits befüllte erste Gassack inklusive dessen Wirkbereich in Richtung des Insassen verschoben wird und dort die Belastung auf den Insassen reduziert wird. Ist der Abstand zwischen Insassen und Vordersitz groß, so kann sich der erste Gassack frei entfalten und der zusätzliche zweite Gassack kann den ersten Gassack in Richtung des Insassen verschieben. Ist der Abstand zwischen dem Insassen und dem Vordersitz sehr klein, so entfaltet sich der zweite Gassack eventuell nicht komplett, der zusätzliche erste Gassack jedoch in jedem Fall. Diese Kombination ist dabei immer in der Lage, die Belastungen auf den Insassen zu reduzieren und bei Bedarf einen Kopfkontakt zum Sitz zu vermeiden.

Der erste Gassack ist als Röhrenstruktursack ausgebildet. Der Röhrenstrukturgassack beziehungsweise der Röhrenstrukturairbag besteht dabei aus einer aktiv befüllten Röhrenstruktur und einer Ventilfolie, die die Airbaghülle umschließt und mit Hilfe der Umgebungsluft einen Airbag mit konventionellem Volumen entfaltet. Durch diese Eigenschaften entfaltet sich dieser bei Kontakt zu Hindernissen nur reduziert. Das heißt, stößt eine Röhre bei der Befüllung auf ein Hindernis, weicht diese aus, der Luftsack kann sich dann nicht komplett befüllen und bildet ein kleineres Volumen. Durch den zweiten Gassack kann jedoch verhindert werden, dass auch bei einer Nichtentfaltung beziehungsweise nicht vollständigen Entfaltung des Röhrenstruktursacks dennoch zuverlässig ein Auffangen realisiert werden kann. Insbesondere wird somit durch den Röhrenstruktursack eine Stützstruktur in der Auffangposition erzeugt, der von einer Umhüllung umgeben ist, welche entweder mit Umgebungsluft oder aber auch mit einem druckbeaufschlagten Gas gefüllt sein kann. Mit anderen Worten wird vorliegend die Entfaltung des Airbags durch die Stützstruktur erreicht, welche mittels eines entsprechenden Gases oder mechanisch vergrößert wird. Der Hüllkörper beziehungsweise die mechanischen Bauteile sind dabei zu einem Gerüst beziehungsweise einem Fachwerk oder dergleichen miteinander verbunden. Trift nun beispielsweise ein Sitzinsasse eines Personenkraftwagens im Verlauf eines Unfallszenarios auf den Airbag auf, so soll eine möglichst gute Rückhaltewirkung erzielt werden. Insbesondere wenn die Stützstruktur beziehungsweise die zugehörige Umhüllung Umgebungsluft eingeschlossen ist, wird die Rückhaltewirkung beispielsweise dadurch optimiert, dass wenigstens ein sich innerhalb des Rückhaltevolumens erstreckendes Verbindungselement vorgesehen ist, welches mit der Stützstruktur und/oder der Umhüllung verbunden ist. Dies ist insbesondere deshalb wichtig, da zum Zeitpunkt des Auftreffens des Insassen auch das Rückhaltevolumen beziehungsweise dessen Innendruck prinzipiell eher geringer ist als bei konventionellen Airbags. Der Innendruck zur Rückhaltung wird vor allem durch den auftretenden Passagier selbst bei der Vorverlegung erzeugt. Daher ist es besonders wichtig, dass dieser Druckaufbau zur Rückhaltung möglichst effizient erfolgt. Dies geschieht insbesondere durch das Verbindungselement, durch welches beispielsweise ein unkontrolliertes Webbewegen der Stützstruktur beziehungsweise des Rückhaltevolumens zuverlässig verhindert wird, so dass die vollständige Rückhaltefunktion gewährleistet werden kann.

Weiterhin vorteilhaft ist, wenn die Entfaltungseinrichtung zum Entfalten des ersten Gassacks und des zweiten Gassacks ausgebildet ist. Insbesondere ist somit eine einzige Entfaltungseinrichtung vorgesehen, welche den ersten Gassack und den zweiten Gassack befüllen kann. Beispielsweise kann dies über einen Gasgenerator oder über eine entsprechende Pyrotechnik erfolgen. Somit kann bauteilreduziert die Entfaltung des ersten Gassacks und des zweiten Gassacks realisiert werden.

Ferner hat es sich als vorteilhaft erwiesen, wenn die Airbagvorrichtung eine weitere Entfaltungseinrichtung aufweist, und die weitere Entfaltungseinrichtung zum Entfalten des zweiten Gassacks ausgebildet ist. Insbesondere kann somit jeder Gassack eine eigene Entfaltungseinrichtung aufweisen, welche beispielsweise als Gasgenerator oder durch Pryotechnik erzeugt ist. Insbesondere kann somit realisiert werden, dass beispielsweise auch eine unterschiedliche Ansteuerung des ersten Gassacks und des zweiten Gassacks realisiert werden kann. Beispielsweise können diese zeitlich nacheinander beziehungsweise aufeinanderfolgend ausgelöst werden. Insbesondere in Abhängigkeit einer Sitzposition der verschiebbaren Sitzvorrichtungen in Abhängigkeit einer Aufprallstärke kann beispielsweise der erste Gassack oder der zweite Gassack oder bei zusammen entsprechend dadurch entfaltet werden, wodurch eine erhöhte Sicherheit situationsabhängig realisiert werden kann. Des Weiteren kann auch bei einem Ausfall einer der Entfaltungseinrichtungen zumindest der andere Gassack entfaltet werden.

Die Airbagvorrichtung ist dazu ausgebildet, den ersten Gassack und den zweiten Gassack unabhängig voneinander zu entfalten. Insbesondere kann beispielsweise zuerst der erste Gassack und dann der zweite Gassack unabhängig voneinander entfaltet werden. Auf Basis dessen kann beispielsweise realisiert werden, dass zumindest der erste Gassack vollumfänglich aufgeblasen ist, wodurch ein Schutz des Insassen gewährleistet werden kann. Durch die Entfaltung des zweiten Gassacks kann dann wiederum ein verbesserter Schutz realisiert werden. Insbesondere kann somit situationsabhängig die Entfaltung des ersten Gassacks und des zweiten Gassacks realisiert werden.

Erfindungsgemäß weist die Airbagvorrichtung einen dritten Gassack auf, welcher im entfalteten Zustand vor dem ersten Gassack entfaltet ist und somit dem Insassen zugewandt ist. Insbesondere ist somit in einer Hauptfahrrichtung des Kraftfahrzeugs betrachtet zuerst die Rückenlehne, dann der zweite Gassack, dann der erste Gassack und dann der dritte Gassack angeordnet, wobei der Insasse wiederum dem dritten Gassack zugewandt sitzt. Insbesondere ist der dritte Gassack von dem ersten Gassack getrennt aufgespannt. Ist der Abstand zwischen dem Insassen und dem Vordersitz sehr groß, so können sich die beiden Gassäcke entfalten. Ist der Abstand zwischen dem Insassen und dem Vordersitz sehr klein, so entfaltet sich lediglich der erste Gassack, der zweite Gassack kann sich durch den frühzeitigen Kontakt zum Insassen nicht frei entfalten. Somit kann in den unterschiedlichen Positionen der Sitzvorrichtung zuverlässig ein Auffangen des Insassen bei einem Aufprall realisiert werden.

Ferner hat es sich als vorteilhaft erwiesen, wenn der dritte Gassack als Röhrenstruktursack ausgebildet ist. Insbesondere kann somit auch für den dritten Gassack eine entsprechende Auffangstruktur geschaffen werden, so dass ein zuverlässiges und sicheres Auffangen des Insassen bei einem insbesondere Frontalaufprall realisiert werden kann.

In einer weiteren vorteilhaften Ausgestaltungsform ist der dritte Gassack mit dem ersten Gassack pneumatisch gekoppelt. Beispielsweise können der erste Gassack und der dritte Gassack über ein entsprechendes Ventil miteinander pneumatisch gekoppelt sein. Dadurch ist es ermöglicht, dass über eine einzige Entfaltungseinrichtung des ersten Gassacks auch der dritte Gassack aufgefüllt werden kann.

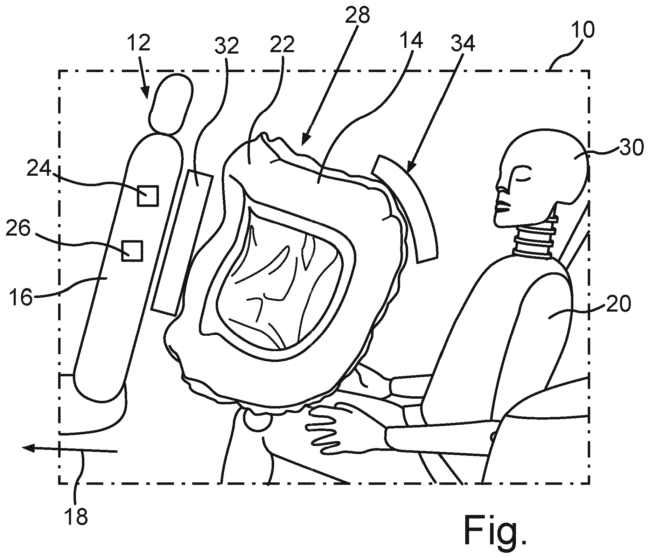

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Figur eine schematische Seitenansicht in einen Innenraum einer Ausführungsform eines Kraftfahrzeugs mit einer Ausführungsform einer Sitzvorrichtung mit einer Ausführungsform einer Airbagvorrichtung.

In der Figur sind gleiche oder funktionsgleiche Elemente mit gleichen Bezugszeichen versehen.

Die Figur zeigt in einer schematischen Seitenansicht eine Ausführungsform eines Kraftfahrzeugs 10 mit einer Ausführungsform einer Sitzvorrichtung 12. Die Sitzvorrichtung 12 weist zumindest eine Airbagvorrichtung 14 sowie ein Rückenteil 16 auf. Beispielsweise kann die Sitzvorrichtung 12 für einen Fahrer des Kraftfahrzeugs 10 oder für einen Beifahrer des Kraftfahrzeugs 10 ausgebildet sein. Die Sitzvorrichtung 12 ist dabei insbesondere verschiebbar, insbesondere entlang einer Längsverschiebungsrichtung 18 verschiebbar gelagert, so dass beispielsweise der Fahrer des Kraftfahrzeugs 10 eine entsprechende Position entlang der Längsverschiebungsrichtung 18 einnehmen kann. Die Sitzvorrichtung 12 weist zumindest die Airbagvorrichtung 14 auf, wobei die Airbagvorrichtung 14 für einen Insassen 20 ausgebildet ist, wobei der Insasse 20 sich in dieser Längsverschiebungsrichtung 18 betrachtet hinter der Sitzvorrichtung 12 befindet und sich beispielsweise in einem Fondbereich des Kraftfahrzeugs 1 aufhalten kann.

Die Airbagvorrichtung 14 weist zumindest einen ersten Gassack 22 auf, welcher mit einer Entfaltungseinrichtung 24 der Airbagvorrichtung 14 in Abhängigkeit von einem Ansteuerungssignal, beispielsweise von einer elektronischen Recheneinrichtung 26 der Airbagvorrichtung 14, in eine Auffangstellung 28 entfaltet ist, wobei der erste Gassack 22 zum Auffangen eines Körperteils 30, vorliegend eines Kopfes des Insassen 20, ausgebildet ist, wobei der Insasse 20 dem Rückenteil 16 zugewandt ist. Die Airbagvorrichtung 14 weist zumindest einen zweiten Gassack 32 auf, welcher zumindest in der Auffangstellung 28 zwischen dem Rückenteil 16 und dem ersten Gassack 22 entfaltet ist. Der erste Gassack 22 ist dabei insbesondere als sogenannter Röhrenstruktursack ausgebildet.

Die Entfaltungseinrichtung 24 kann dabei insbesondere zum Entfalten des ersten Gassacks 22 und des zweiten Gassacks 32 ausgebildet sein. Alternativ kann die Airbagvorrichtung 14 auch eine zweite Entfaltungseinrichtung aufweisen, welche zum separaten Entfalten des zweiten Gassacks 32 ausgebildet ist.

Es ist vorgesehen vorgesehen, dass die Airbagvorrichtung 14 dazu ausgebildet ist, den ersten Gassack 22 und den zweiten Gassack 32 voneinander unabhängig zu entfalten.

Die Figur zeigt ferner, dass die Airbagvorrichtung 14 auch einen dritten Gassack 34 aufweist, welcher bevorzugt ebenfalls als Röhrenstruktursack ausgebildet ist, wobei der dritte Gassack 34 im entfalteten Zustand vor dem ersten Gassack 22 entfaltet ist und somit dem Insassen 20 zugewandt ist. Der dritte Gassack 34 kann dabei mit dem ersten Gassack 22 pneumatisch gekoppelt sein.

Insbesondere ist somit eine Airbagvorrichtung 14 für den Fondbereich des Kraftfahrzeugs 10 bereitgestellt, welcher insbesondere am Vordersitz, insbesondere am Rückenteil 16, angeordnet ist, und durch die Verschiebemöglichkeit entlang der Längsverschiebungsrichtung 18 dennoch eine sichere Auffangbasis für den Insassen 20 bietet, auch wenn unterschiedliche Abstände zum Rückenteil 16 zu verzeichnen sind. Insbesondere wird dabei vorgeschlagen, dass zwischen dem Rückenteil 16 und dem ersten Gassack 22 der zweite Gassack 32 angeordnet ist, der die Abstandsanpassung übernimmt.

Ergänzend kann der dritte Gassack 34 vorgesehen sein, der ebenfalls als Strukturairbag ausgebildet ist und im weiteren Bereich entsprechende Röhren und Fangkörper aufweist und ebenfalls einen nochmals weiteren Freiraum auffüllen kann. Insbesondere kann dabei vorgesehen sein, dass der erste Gassack 22 und der dritte Gassack 34, die beide bevorzugt als Röhrenstruktursack ausgebildet sind, pneumatisch gekoppelt sind und beispielsweise lediglich über Ventile oder Drosseln voneinander getrennt sind, so dass eine gemeinsame Befüllung realisiert werden kann. Der dritte Gassack 34 kann dabei jedoch zeitlich verzögert vom ersten Gassack 22 befüllt werden.

Insbesondere kann vorgesehen sein, dass zumindest der erste Gassack 22 und der zweite Gassack 32 miteinander gemeinsam befüllt werden können und beispielsweise auch die Entfaltungseinrichtung 24 aufweisen, welche beispielsweise als Gasgenerator oder als Pryotechnik ausgebildet ist. Alternativ kann auch jede der Gassäcke 22, 32, 34 eine eigene Entfaltungseinrichtung 24 aufweisen. Ferner ist auch eine Ansteuerung der jeweiligen Entfaltungseinrichtungen 24 einstufig möglich, so dass sich der erste Gassack 22 und der zweite Gassack 32 beispielsweise gleichzeitig entfalten können oder gleichartig entfalten können. Es ist alternativ auch eine mehrstufige Variante möglich, wobei dann beispielsweise über eine Volumenerhöhung beziehungsweise Druckerhöhung der erste Gassack 22 und der zweite Gassack 32 im Anschluss daran über Ventile entsprechend befüllt werden können. Insbesondere kann dabei vorgesehen sein, dass sich beispielsweise zuerst der erste Gassack 22 befüllt und dann mehrstufig der zweite Gassack 32 befüllt. Bei zwei oder mehreren Entfaltungseinrichtungen 24 können diese ebenso gemeinsam angesteuert werden, wobei unter gemeinsam insbesondere gleichzeitig zu verstehen ist, oder auch zwei- beziehungsweise mehrstufig erfolgen, so dass zum Beispiel sich der erste Gassack 22 immer entfaltet, aber der zweite Gassack 32 nur in Abhängigkeit von anderen Parametern entfaltet wird und dann auch die Entfaltungszeit beziehungsweise ein Entfaltungsanfang in Abhängigkeit davon erfolgen kann. Hierbei kann ebenso die Sitzeinstellung der Sitzvorrichtung 12 und vor allem die Position der Rückenlehne 16 in Fahrtrichtung, insbesondere ob diese sich in Längsrichtung bewegt hat, als Einflussgröße zur Aktivierung des zweiten Gassacks 32 genutzt werden, wenn diese verfügbar ist. Wie bereits beschrieben, kann die Aktivierung auch ohne zusätzliche Information beziehungsweise Parameter erfolgen, so dass der zweite Gassack 32 nur in Abhängigkeit der Aktivierung des ersten Gassacks 22 sozusagen "unsensiert" gesteuert wird.

### Bezugszeichenliste

- 10: Kraftfahrzeug
- 12: Sitzvorrichtung
- 14: Airbagvorrichtung
- 16: Rückenteil
- 18: Längsverschiebungsrichtung
- 20: Insasse
- 22: Erster Gassack
- 24: Entfaltungseinrichtung
- 26: Elektronische Recheneinrichtung
- 28: Auffangstellung
- 30: Kopf
- 32: Zweiter Gassack
- 34: Dritter Gassack

## Patentansprüche

1. Sitzvorrichtung (12) mit einem Rückenteil (16) für ein Kraftfahrzeug (10), mit einer an dem Rückenteil (16) der Sitzvorrichtung (12) angeordneten Airbagvorrichtung (14), mit zumindest einem ersten Gassack (22), welcher mit einer Entfaltungseinrichtung (24) der Airbagvorrichtung (14) in Abhängigkeit von einem Ansteuerungssignal in eine Auffangstellung (28) entfaltet ist, wobei der erste Gassack (22) in der Auffangstellung (28) zum Auffangen eines Körperteils (30) eines Insassen (20) des Kraftfahrzeugs (10) ausgebildet ist, wobei der Insasse (20) dem Rückenteil (16) zugewandt ist und der Insasse (20) sich in einer Längsverschiebungsrichtung (18) der Sitzvorrichtung (12) betrachtet hinter der Sitzvorrichtung (12) befindet, wobei die Airbagvorrichtung (14) einen zweiten Gassack (32) aufweist, welcher zumindest in der Auffangstellung (28) zwischen dem Rückenteil (16) und dem ersten Gassack (22) entfaltet ist und der erste Gassack (22) als Röhrenstruktursack ausgebildet ist und der Röhrenstrukturgassack aus einer aktiv befüllten Röhrenstruktur und einer Ventilfolie besteht und die Airbagvorrichtung (14) einen dritten Gassack (34) aufweist, welcher im entfalteten Zustand vor dem ersten Gassack (22) entfaltet ist und somit dem Insassen (20) zugewandt ist, **dadurch gekennzeichnet , dass** die Airbagvorrichtung (14) dazu ausgebildet ist, den ersten Gassack (22) und den zweiten Gassack (32) unabhängig voneinander zu entfalten.

2. Sitzvorrichtung (12) nach Anspruch 1,
**dadurch gekennzeichnet, dass**
die Entfaltungseinrichtung (24) zum Entfalten des ersten Gassacks (22) und des zweiten Gassacks (32) ausgebildet ist.

3. Sitzvorrichtung (12) nach Anspruch 1,
**dadurch gekennzeichnet, dass**
die Airbagvorrichtung (14) zumindest eine weitere Entfaltungseinrichtung aufweist und die weitere Entfaltungseinrichtung zum Entfalten des zweiten Gassacks (32) ausgebildet ist.

4. Sitzvorrichtung (12) nach einem der vorhergehenden Ansprüche,
**dadurch gekennzeichnet, dass**
der dritte Gassack (34) als Röhrenstruktursack ausgebildet ist.

5. Sitzvorrichtung (12) nach einem der vorhergehenden Ansprüche,
**dadurch gekennzeichnet, dass**
der dritte Gassack (34) mit dem ersten Gassack (22) pneumatisch gekoppelt ist.

## Claims

1. Seat apparatus (12), having a backrest (16), for a motor vehicle (10), which seat apparatus comprises an airbag apparatus (14) which is arranged on the backrest (16) of the seat apparatus (12) and has at least a first gas bag (22) which is deployed into a restraint position (28) by means of a deployment device (24) of the airbag apparatus (14) depending on an actuation signal, wherein the first gas bag (22), is designed, in the restraint position (28), to restrain a body part (30) of a passenger (20) of the motor vehicle (10), wherein the passenger (20) is facing the backrest (16) and the passenger (20) is located behind the seat apparatus (12) when viewed in a longitudinal movement direction (18) of the seat apparatus (12),
wherein
the airbag apparatus (14) has a second gas bag (32) which, at least in the restraint position (28), is deployed between the backrest (16) and the first gas bag (22), and the first gas bag (22) is a tubular structure bag and the tubular structure gas bag consists of an actively filled tubular structure and a valve film, and the airbag apparatus (14) has a third gas bag (34) which, in the deployed state, is deployed in front of the first gas bag (22) and therefore faces the passenger (20), **characterized in that**
the airbag apparatus (14) is designed to deploy the first gas bag (22) and the second gas bag (32) independently of one another.

2. Seat apparatus (12) according to claim 1,
**characterized in that**
the deployment device (24) is designed to deploy the first gas bag (22) and the second gas bag (32).

3. Seat apparatus (12) according to claim 1,
**characterized in that**
the airbag apparatus (14) has at least a further deployment device and the further deployment device is designed to deploy the second gas bag (32).

4. Seat apparatus (12) according to any of the preceding claims,
**characterized in that**
the third gas bag (34) is designed as a tubular structure bag.

5. Seat apparatus (12) according to any of the preceding claims,
**characterized in that**
the third gas bag (34) is pneumatically coupled to the first gas bag (22).

## Revendications

1. Dispositif formant siège (12) comportant une partie dorsale (16) pour un véhicule automobile (10), comportant un dispositif formant sac gonflable (14) disposé sur la partie dorsale (16) du dispositif formant siège (12), comportant au moins un premier coussin à gaz (22) qui est déployé dans une position de collecte (28) avec un appareil de déploiement (24) du dispositif formant sac gonflable (14) en fonction d'un signal de commande, dans lequel le premier coussin à gaz (22) est conçu pour collecter, dans la position de collecte (28), une partie corporelle (30) d'un passager (20) du véhicule automobile (10), dans lequel le passager (20) est tourné vers la partie dorsale (16) et le passager (20) se trouve, vu dans une direction de coulissement longitudinal (18) du dispositif formant siège (12), derrière le dispositif formant siège (12),
dans lequel
le dispositif formant sac gonflable (14) présente un deuxième coussin à gaz (32) qui, au moins dans la position de collecte (28), est déployé entre la partie dorsale (16) et le premier coussin à gaz (22) et le premier coussin à gaz (22) est réalisé sous forme de coussin à structure tubulaire et le coussin à gaz à structure tubulaire est constitué d'une structure tubulaire remplie activement et d'une feuille de soupape et le dispositif formant sac gonflable (14) présente un troisième coussin à gaz (34) qui, à l'état déployé, est déployé devant le premier coussin à gaz (22) et est ainsi tourné vers le passager (20), **caractérisé en ce que**
le dispositif formant sac gonflable (14) est conçu pour déployer le premier coussin à gaz (22) et le deuxième coussin à gaz (32) indépendamment l'un de l'autre.

2. Dispositif formant siège (12) selon la revendication 1,
**caractérisé en ce que**
l'appareil de déploiement (24) est conçu pour déployer le premier coussin à gaz (22) et le deuxième coussin à gaz (32).

3. Dispositif formant siège (12) selon la revendication 1,
**caractérisé en ce que**
le dispositif formant sac gonflable (14) présente au moins un autre appareil de déploiement et l'autre appareil de déploiement est conçu pour déployer le deuxième coussin à gaz (32).

4. Dispositif formant siège (12) selon l'une des revendications précédentes,
**caractérisé en ce que**
le troisième coussin à gaz (34) est réalisé sous forme de coussin à structure tubulaire.

5. Dispositif formant siège (12) selon l'une des revendications précédentes,
**caractérisé en ce que**
le troisième coussin à gaz (34) est accouplé pneumatiquement au premier coussin à gaz (22).
